Europäisches Patentamt

European Patent Office

Office européen des brevets

(19)

(11) EP 0 573 818 B1

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int. Cl.$^6$: **C04B 35/00**, C30B 29/30, C01G 33/00, C01G 35/00

(21) Anmeldenummer: **93108035.2**

(22) Anmeldetag: **17.05.1993**

(54) **Verfahren zur Herstellung von Blei-Perowskiten**

Process for the production of lead perovskites

Procédé de production de perovskites de plomb

(84) Benannte Vertragsstaaten:
**DE ES FR NL**

(30) Priorität: **29.05.1992 DE 4217817**

(43) Veröffentlichungstag der Anmeldung:
**15.12.1993 Patentblatt 1993/50**

(73) Patentinhaber: **H.C. Starck GmbH & Co. KG**
**D-38642 Goslar (DE)**

(72) Erfinder:
• **Reichert, Karlheinz, Dr.**
**W-3343 Hornburg (DE)**
• **Poth, Stefan, Dipl.-Ing.**
**W-3344 Achim (DE)**
• **Sulkowski, Udo**
**W-3387 Vienenburg (DE)**

(74) Vertreter: **Steiling, Lothar, Dr. et al**
**D-51368 Leverkusen (DE)**

(56) Entgegenhaltungen:
**EP-A- 0 428 387**

**Beschreibung**

Die vorliegende Erfindung betrifft ein Verfahren zur Herstellung von Bleimetallniobaten und/oder -tantalaten mit Perowskitstruktur der Formel $Pb_3Me(II)A_2O_9$ bzw. $Pb_2Me(III)AO_6$, wobei A = Nb und/oder Ta und Me = Mg, Fe, Co, Ni, Cr, Mn, Cd, Cu und/oder Zn ist, durch Naß-mischen der Niob- und/oder Tantalkomponente mit den entsprechenden Metallkomponenten und der entsprechenden Bleikomponente, Trocknen und Kalzinieren.

Aufgrund der hohen Dielektrizitätskonstanten und des großen elektrostriktiven Koeffizienten spielen Ferroelektrika wie z.B. PbMg-Niobat (PMN), PbNi-Niobat (PNN) oder PbZn-Niobat (PZN) eine zunehmend wichtige Rolle. Solche Verbindungen mit Perowskit-Struktur entsprechen der allgemeinen Formel $Pb_3Me(II)Nb_2O_9$ bzw. $Pb_2Me(III)NbO_6$, wobei Me = Mg, Fe, Co, Ni, Cr, Mn, Cd, Cu, Zn bedeuten (Appl. Phys. Lett., 10 (5) 163-165 (1967)).

Für die Herstellung von komplexen ferroelektrischen Perowskiten mit einem Übergangsmetall der 5. Nebengruppe sind mehrere Verfahren bekannt:

Aus J. Am, Ceram. Soc. 71 (5), C-250-C-251 (1988) ist das Mischen der Oxide mit anschließender Feststoffreaktion bei sehr hohen Kalzinationstemperaturen bekannt. Es ist äußerst schwierig, über dieses keramische Verfahren phasenreine Perowskite mit mehr als 95 % Perowskit-Phase herzustellen. Unvermeidbar tritt bei dieser Festkörperreaktion eine stabile Pyrochlor-Phase auf, Aus J. am. Ceram. Soc. 67 (5) 311-314 (1984) ist bekannt, $Nb_2O_5$ beispielsweise mit MgO in einer Feststoffreaktion vorreagieren zu lassen, wobei man bei der anschließenden Reaktion mit PbO gemäß den Formeln

$$Nb_2O_5 + MgO \xrightarrow{(1000°C)} MgNb_2O_6 \text{ (Columbit)} \tag{I}$$

$$Mg_2NbO_6 + 3\,PbO \rightarrow Pb_3MgNb_2O_0 \text{ (Perowskit)} \tag{II}$$

einen fast phasenreinen Perowskit erhält.

Aufgrund der hohen Temperaturen bei der Vorreaktion zum Columbit bei 1000°C erhält man jedoch aus den genannten Mischoxiden nur ein mäßig reaktives Mg-Niobat, so daß die anschließende Umsetzung mit PbO erst bei höheren Temperaturen zum Erfolg führt.

Als vorteilhafter erwiesen sich für die Herstellung von komplexen Perowskiten naßchemische Verfahren. So wird in J. Am. Ceram. Soc. 72 (8), 1335-1357 (1989) die Hydrolyse eines Alkoxid-Gemisches, in EP-A 294 991 die Cofällung aus einer alkoholischen Oxalsäurelösung beschrieben, Aus Advances in Ceramics, Vo, 21, 91-98 (1987) ist die Kalzination eines Gels bekannt, das aus $NbCl_5$ bzw. $Nb(OR)_5$ und Metallsalzen durch Zusatz von $H_2O_2$ und Citronensäure hergestellt wurde. In der Regel erhält man über die Copräzipitation sehr reaktive Vorprodukte, die sich schon bei niedrigen Temperaturen zu den entsprechenden phasenreinen Perowskiten umsetzen. Die Sintereigenschaften dieser sehr feinen Pulver sind entsprechend gut. Bisher sind diese naßchemischen Verfahren allerdings sehr unwirtschaftlich. So weist die Alkoxidmethode den Nachteil auf, daß die Herstellung und die Handhabung der Ausgangsstoffe schwierig ist.

Bei der Oxalat-Methode besteht nicht die Möglichkeit, alle Komponenten gemeinsam zu fällen, weil aufgrund der stark unterschiedlichen Löslichkeiten der Metalloxalate in einem Alkohol/Wasser-Gemisch Probleme auftreten. Trotzdem erhält man auch hier bereits ein sehr feinkörniges Pulver mit guten Sintereigenschaften. Der schwerwiegendste Nachteil der Oxalat-Methode liegt in den sehr großen Alkoholmengen, die man benötigt, um alle Komponenten quantitativ zu fällen. Außerdem ist die geringe Löslichkeit von Nioboxalat hierbei von Nachteil. Die hier genannten Verfahren nach dem Stand der Technik weisen entweder die Nachteile auf, daß bei den keramischen Verfahren die Kalzinations- und Sintertemperaturen sehr hoch liegen oder daß die naßchemischen Verfahren sehr aufwendig und mit hohen Kosten verbunden sind.

Es ist somit Aufgabe der vorliegenden Erfindung, ein Verfahren zur Herstellung von Perowskiten bereitzustellen, daß die Nachteile des Standes der Technik nicht aufweist.

Es wurde nun gefunden, daß die Anforderungen erfüllt werden durch ein Verfahren zur Herstellung von Bleimetallniobaten und/oder -tantalaten mit Perowskitstruktur der Formel $Pb_3Me(II)A_2O_9$ bzw. $Pb_2Me(III)AO_6$, wobei A = Nb und/oder Ta und Me = Mg, Fe, Co, Ni, Cr, Mn, Cd, Cu und/oder Zn ist, durch Naßmischen der Niob- und/oder Tantalkomponente mit den entsprechenden Metallkomponenten und der entsprechenden Bleikomponente, Trocknen und Kalzinieren, wobei die Niob- und/oder Tantalkomponente in Form ihrer Hydroxide bzw. ihrer Säuren eingesetzt wird. Dieses Verfahren ist Gegenstand dieser Erfindung.

Wie beschrieben, ist eine Direktsynthese von komplexen Perowskiten über das keramische Verfahren (Mischen der Oxide) nicht möglich, da unvermeidbar bei der Feststoffreaktion eine stabile Pyrochlor-Phase auftritt ($\geqq$ 20 %). Die Herstellung der erfindungsgemäßen Bleimetallniobate und/oder -tantalate gelingt jedoch in einem Verfahrensschritt, wenn man filterfeuchtes Niob- und/oder Tantalhydroxid mit reaktiven Metallkomponenten in einem Mischer homogenisiert.

2

In einer bevorzugten Ausführungsform wird das erfindungsgemäße Verfahren so durchgeführt, daß das Naßmischen aller Komponenten in einem Schritt gemeinsam durchgeführt wird. Das Naßmischen wird vorteilhaft im Bereich von 5 bis 90 min durchgeführt.

Nach dem Trocknen erhält man bei Kalzinationstemperaturen von bevorzugt 600° bis 1000°C einen fast phasenreinen Perowskit mit eiem Perowskit-Anteil von mehr als 97 %. Da auch diese Produkte besonders feinkörnig sind, kann jede weitere physikalische Bearbeitung entfallen.

Nach dem erfindungsgemäßen Verfahren ist somit erstmalig auf dem keramischen Weg die Herstellung von Blei-Perowskiten möglich, der zu den bisher bekannten Verfahren folgende Vorteile aufweist: den Einsatz billigerer Ausgangsstoffe, die Vermeidung von Kontamination beim Homogenisieren, eine drastische Verkürzung der Produktionszeiten bei niedrigen Kalzinationstemperaturen unter Erhalt von sehr guten dielektrischen Eigenschaften der entsprechenden Keramiken.

Im folgenden wird die Erfindung beispielhaft erläutert, ohne daß hierin eine Einschränkung zu sehen ist.

Beispiel 1

1467,2 g filterfeuchtes Niobhydroxid (24,4 % Nb) werden mit 78,5 g MgO (60 % Mg) im Thyssen-Henschel-Mischer für 15 min (2000 U/min) homogenisiert. Danach werden 1500 g Bleihydroxidcarbonat (80 % Pb) zugegeben und für weitere 30 min homogenisiert. Das Stoffgemisch wird bei 105°C getrocknet und bei verschiedenen Temperaturen kalziniert. Bereits bei 500°C hat sich die Pyrochlorphase voll ausgebildet. Die ersten Röntgenreflexe vom Perowskit (PMN) erkennt man bei 700°C. Bei 850°C erhält man den Perowskit mit <2 % Pyrochloranteil.

Beispiel 2

1500 g filterfeuchtes Niobhydroxid (25,5 % Nb) werden mit 370,5 g Eisenoxyhydroxid (62,0 % Fe), 2143 g Bleihydroxidcarbonat (80 % Pb) und 2500 ml Wasser für 30 min in einem Thyssen-Henschel-Mischer (2000 U/min) homogenisiert, anschließend getrocknet und bei 850°C für 2 Stunden kalziniert. Man erhält dabei einen Perowskit mit <2 % Pyrochloranteil.

**Patentansprüche**

1. Verfahren zur Herstellung von Bleimetallniobaten und/oder -tantalaten mit Perowskitstruktur der Formel $Pb_3Me(II)A_2O_9$ bzw. $Pb_2Me(III)AO_6$, wobei A = Nb und/oder Ta und Me = Mg, Fe, Co, Ni, Cr, Mn, Cd, Cu und/oder Zn ist, durch Naßmischen der Niob- und/oder Tantalkomponente mit den entsprechenden Metallkomponenten und der entsprechenden Bleikomponente, Trocknen und Kalzinieren, dadurch gekennzeichnet, daß die Niob- und/oder Tantalkomponente in Form ihrer Hydroxide bzw. ihrer Säuren eingesetzt wird,

2. Verfahren gemäß Anspruch 1, dadurch gekennzeichnet, daß das Naßmischen aller Komponenten in einem Schritt gemeinsam durchgeführt wird,

3. Verfahren gemäß einem der Ansprüche 1 oder 2, dadurch gekennzeichnet, daß das Naßmischen im Bereich von 5 bis 90 min durchgeführt wird.

4. Verfahren gemäß einem oder mehreren der Ansprüche 1 bis 3, dadurch gekennzeichnet, daß die Kalzination im Temperaturbereich von 600°C bis 1000°C durchgeführt wird.

**Claims**

1. A process for the production of lead metal niobates and/or tantalates having the perovskite structure, of general formula $Pb_3Me(II)A_2O_9$ or $Pb_2Me(III)AO_6$, where A = Nb and/or Ta and Me = Mg, Fe, Co, Ni, Cr, Mn, Cd, Cu and/or Zn, by wet mixing the niobium and/or tantalum components with the corresponding metal components and the corresponding lead components, drying and calcination, characterised in that the niobium and/or tantalum components are used in the form of their hydroxides or their acids.

2. A process according to claim 1, characterised in that wet mixing of all the components is effected jointly in one step.

3. A process according to either one of claims 1 or 2, characterised in that wet mixing is effected within the range from 5 to 90 minutes.

4. A process according to one or more of claims 1 to 3, characterised in that calcination is effected within the temperature range from 600°C to 1000°C.

**Revendications**

1. Procédé de fabrication de niobates et/ou tantalates de plomb et de métal à structure de perovskite de formule $Pb_3Me(II)A_2O_9$ ou $Pb_2Me(III)AO_6$, où A = Nb et/ou Ta et Me = Mg, Fe, Co, Ni, Cr, Mn, Cd, Cu et/ou Zn, par mélange au mouillé des composants niobium et/ou tantale avec les composants métaux correspondants et le composant plomb correspondant, séchage et calcination, caractérisé en ce que les composants niobium et/ou tantale sont utilisés sous la forme de leurs hydroxydes ou de leurs acides.

2. Procédé selon la revendication 1, caractérisé en ce que le mélange au mouillé de tous les composants s'effectue conjointement en une étape.

3. Procédé selon une des revendications 1 et 2, caractérisé en ce que le mélange au mouillé s'effectue en 5 à 90 min.

4. Procédé selon une ou plusieurs des revendications 1 à 3, caractérisé en ce que la calcination s'effectue à des températures de l'ordre de 600°C à 1000°C.